# EUROPÄISCHE PATENTSCHRIFT

(11) **EP 3 963 522 B1**
(45) Veröffentlichungstag und Bekanntmachung des Hinweises auf die Patenterteilung: **29.05.2024**
(21) Anmeldenummer: 20732780.0
(22) Anmeldetag: 03.06.2020
(51) Int. Cl.: G06Q 10/20, G06Q 50/40

(54) **VERFAHREN ZUR VERWALTUNG VON DIAGNOSEMELDUNGEN UND -INFORMATIONEN, SOFTWAREPAKET, SERVER ODER SERVERNETZWERK, SYSTEM UND VERWENDUNG**
METHOD FOR MANAGING DIAGNOSTICS MESSAGES AND DIAGNOSTICS INFORMATION, SOFTWARE PACKAGE, SERVER OR SERVER NETWORK, SYSTEM, AND USE
PROCÉDÉ DE GESTION DE MESSAGES ET INFORMATIONS DE DIAGNOSTIC, PAQUET LOGICIEL, SERVEUR OU RÉSEAU DE SERVEURS, SYSTÈME ET UTILISATION

(30) Priorität: 27.06.2019 DE 102019209336
(43) Veröffentlichungstag der Anmeldung: 09.03.2022
(73) Patentinhaber: Siemens Mobility GmbH, 81739 München (DE)
(72) Erfinder: MATTEJAT, Christoph, 91056 Erlangen (DE)
(74) Vertreter: Siemens Patent Attorneys
(86) Internationale Anmeldenummer: PCT/EP2020/065256
(87) Internationale Veröffentlichungsnummer: WO 2020/259965

(56) Entgegenhaltungen:
- EP-B1- 1 600 351
- WO-A1-2006/032307
- DE-A1-102017 216 965
- US-A1- 2018 300 123
- US-A1- 2018 336 024
- US-B1- 8 930 067

## Beschreibung

Die Erfindung betrifft ein Verfahren zur Verwaltung von Diagnosemeldungen und -informationen von einer Fahrzeugflotte, insbesondere von einer Schienenfahrzeugflotte, unter Verwendung eines Softwarepakets.

Softwarepakete zur Verwaltung von Diagnosemeldungen und -informationen von einer Fahrzeugflotte, insbesondere von einer Schienenfahrzeugflotte, sind bekannt. In der Regel werden solche Softwarepakete zur Beurteilung von Diagnosemeldungen verwendet, die von den Fahrzeugen der Fahrzeugflotte ermittelt/erstellt wurden. In der Regel werden die Diagnosemeldungen von den Fahrzeugen an eine landseitige Einheit übermittelt und die landseitige Einheit beurteilt dann die empfangenen Diagnosemeldungen. Je nach Beurteilung kann die landseitige Einheit eine Rückmeldung und/oder eine Handlungsanweisung an das Fahrzeug geben.

Zur Verwaltung der Diagnosemeldungen und -informationen werden diese bei der Erstellung des Softwarepakets im Softwarepaket hinterlegt.

Softwarepakete zur Verwaltung von Diagnosemeldungen und -informationen von einer Fahrzeugflotte durchlaufen einen zeitintensiven Erstellungs- und Freigabeprozess. Sobald ein Softwarepaket verwendet wird, sind Anpassungen und Aktualisierungen innerhalb dieses Softwarepakets kaum noch möglich. Sind Anpassungen und Aktualisierungen notwendig, so muss in der Regel ein neues Softwarepaket erstellt und freigegeben werden.

Die Druckschrift US 2018/300123 A1 offenbart die Überprüfung von Fahrzeugsoftware auf Aktualität und die Erstellung eines Update-Pakets.

Eine Aufgabe der Erfindung ist es, ein verbessertes Verfahren zur Verwaltung von Diagnosemeldungen und -informationen von einer Fahrzeugflotte anzugeben, bei welchem das verwendete Softwarepaket in gewissem Maße angepasst und/oder aktualisiert werden kann.

Die Aufgabe wird gelöst durch ein Verfahren zur Verwaltung von Diagnosemeldungen und -informationen von einer Fahrzeugflotte, insbesondere von einer Schienenfahrzeugflotte, unter Verwendung eines Softwarepakets, bei dem erfindungsgemäß bei der Erstellung des Softwarepakets in einem ersten Teil des Softwarepakets eine Vielzahl von Diagnosemeldungen für die Fahrzeuge der Fahrzeugflotte hinterlegt wird. Erfindungsgemäß werden nach der Erstellung des Softwarepakets in einem zweiten Teil des Softwarepakets zumindest für einen Teil der Diagnosemeldungen Informationen hinterlegt und/oder verändert.

Auf diese Weise kann der zweite Teil des Softwarepakets nach der Erstellung des Softwarepakets angepasst und/oder aktualisiert werden. Auf diese Weise kann ein flexibleres Verfahren zur Verwaltung von Diagnosemeldungen und -informationen bereitgestellt werden.

Eine Diagnosemeldung umfasst vorzugsweise zumindest einen Diagnosecode. Ferner kann eine Diagnosemeldung eine Kurzbeschreibung umfassen.

Eine Information für eine Diagnosemeldung, kurz "Diagnoseinformation" oder "Information", kann beispielsweise eine Beschreibung, eine Wartungsanweisung, eine Warnstufe, eine Priorität, einen Kommentar und/oder Ähnliches für die jeweilige Diagnosemeldung umfassen.

Die Vielzahl von Diagnosemeldungen, die bei der Erstellung des Softwarepakets in dem ersten Teil des Softwarepakets hinterlegt wird, umfasst diejenigen Diagnosemeldungen, die in den Fahrzeugen der Fahrzeugflotte auftreten können. Mit anderen Worten: Die Vielzahl von Diagnosemeldungen, die bei der Erstellung des Softwarepakets in dem ersten Teil des Softwarepakets hinterlegt wird, umfasst vorzugsweise die in den Fahrzeugen der Fahrzeugflotte möglichen Diagnosemeldungen.

Sinnvollerweise wird der erste Teil des Softwarepakets bei der Erstellung des Softwarepakets fest vorgegeben. Auf diese Weise kann der erste Teil des Softwarepakets nach der Erstellung des Softwarepakets nicht mehr veränderbar, d. h. unveränderbar, sein.

Es ist bevorzugt, wenn der erste Teil unter der Verwendung von zumindest einer Fahrzeugsoftware für die Fahrzeuge der Fahrzeugflotte fest vorgegeben wird.

Als Fahrzeugsoftware für die Fahrzeuge der Fahrzeugflotte kann eine Fahrzeugsoftware verstanden werden, die für die Fahrzeuge der Fahrzeugflotte zumindest geeignet ist. Es ist vorteilhaft, wenn zumindest ein Teil der Fahrzeuge der Fahrzeugflotte die Fahrzeugsoftware aufweist.

Es ist zweckmäßig, wenn jedes Fahrzeug der Fahrzeugflotte jeweils eine Fahrzeugsoftware aufweist.

Der erste Teil kann beispielsweise unter der Verwendung von mehrerer Fahrzeugsoftwares für die Fahrzeuge der Fahrzeugflotte fest vorgegeben werden. Jedes Fahrzeug der Fahrzeugflotte kann jeweils eine der mehreren Fahrzeugsoftwares aufweisen.

In einer bevorzugten Ausgestaltung der Erfindung weisen die Fahrzeuge der Fahrzeugflotte verschiedene Fahrzeugsoftwares auf. Die letztgenannten, verschiedenen Fahrzeugsoftwares können die zuvor genannten mehreren Fahrzeugsoftwares sein.

Es ist vorteilhaft, wenn der erste Teil des Softwarepakets mehrere Versionen aufweist.

Zweckmäßigerweise wird zur Erstellung des Softwarepakets für jede Version jeweils eine jeweilige Fahrzeugsoftware herangezogen. Beispielsweise kann jede Version jeweils zumindest als Teil einer jeweiligen Fahrzeugsoftware ausgebildet sein.

Weiter ist es zweckmäßig, wenn die verschiedenen Versionen bei der Erstellung des Softwarepakets miteinander verknüpft werden.

Unter Verwendung der Verknüpfung(en) können Erfahrungen, die unter Verwendung von Fahrzeugen mit einer ersten der Fahrzeugsoftwares gemacht wurden, auf Fahrzeuge mit einer anderen Fahrzeugsoftware übertragen werden.

Insbesondere können auf diese Weise Diagnoseinformationen für bestimmte Diagnosemeldungen, die beispielsweise mittels Fahrzeugen mit der ersten Fahrzeugsoftware ermittelt wurden, auf Diagnosemeldungen, die mittels Fahrzeugen mit einer anderen Fahrzeugsoftware ermittelt werden, übertragen werden.

Auf diese Weise kann die Verwaltung der Diagnoseinformationen verbessert werden.

Nach der Erstellung des Softwarepakets können Informationen zumindest für einen Teil der Diagnosemeldungen, kurz "Diagnoseinformationen" oder "Informationen", in dem zweiten Teil des Softwarepakets insbesondere durch zumindest einen Benutzer hinterlegt und/oder verändert werden.

Beim Hinterlegen einer Information kann eine Information - insbesondere in dem zweiten Teil des Softwarepakets - hinzugefügt werden.

Bei Verändern einer Information kann eine - insbesondere in dem zweiten Teil des Softwarepakets - bereits bestehende Information durch eine neue Information ersetzt werden. Weiter kann beim Verändern einer Information eine bereits bestehende Information gelöscht werden. Ferner kann beim Verändern einer Information eine bereits bestehende Information ergänzt werden, beispielsweise mit Kommentaren versehen werden o. Ä.. Es ist vorteilhaft, wenn nach der Erstellung des Softwarepakets zumindest ein Benutzer, insbesondere mehrere Benutzer, auf den zweiten Teil des Softwarepakets zugreifen kann/können und Informationen hinzufügen, löschen und/oder ändern kann/können.

Auf diese Weise können zumindest für einen Teil der Diagnosemeldungen durch zumindest einen Benutzer Informationen hinterlegt und/oder verändert werden, insbesondere hinzugefügt, gelöscht und/oder geändert werden.

Auf diese Weise können beim Hinterlegen und/oder Verändern von Informationen in dem zweiten Teil des Softwarepakets Informationen vorzugsweise hinzugefügt, gelöscht und/oder geändert werden.

Auf diese Weise können die Informationen auf einem aktuellen Stand gehalten werden.

Als Benutzer kann vorzugsweise ein Benutzer des Softwarepakets aufgefasst werden. Ein Benutzer kann beispielsweise ein Depot für die Fahrzeuge der Fahrzeugflotte sein. Weiter kann ein Benutzer beispielsweise ein Fahrer-Support für die Fahrzeuge der Fahrzeugflotte sein. Auch andere Benutzer sind denkbar.

Ferner ist die Erfindung gerichtet auf ein Softwarepaket zur Verwaltung von Diagnosemeldungen und -informationen von einer Fahrzeugflotte, insbesondere von einer Schienenfahrzeugflotte.

Das erfindungsgemäße Softwarepaket umfasst einen ersten Teil, in welchem eine Vielzahl von Diagnosemeldungen für die Fahrzeuge der Fahrzeugflotte hinterlegt ist. Weiter umfasst das erfindungsgemäße Softwarepaket einen zweiten Teil, in welchem zumindest für einen Teil der Diagnosemeldungen Informationen hinterlegt sind. Erfindungsgemäß ist der zweite Teil des Softwarepakets nach der Erstellung des Softwarepakets veränderbar.

Das Softwarepaket kann das zuvor im Zusammenhang mit dem Verfahren genannte Softwarepaket sein.

Insbesondere kann der zweite Teil (des Softwarepakets) durch zumindest einen Benutzer, insbesondere durch mehrere Benutzer, veränderbar sein.

Zweckmäßigerweise ist der zweite Teil veränderbar, indem Informationen hinterlegt und/oder verändert werden können, insbesondere hinzugefügt, gelöscht und/oder geändert werden können.

Es ist zweckmäßig, wenn der erste Teil des Softwarepakets nach der Erstellung des Softwarepakets nicht veränderbar, d. h. unveränderbar, ist.

Es ist vorteilhaft, wenn der erste Teil des Softwarepakets mehrere Versionen, auch Diagnose-Versionen, aufweist. Vorzugsweise sind die mehreren Versionen miteinander verknüpft.

Jede Version des ersten Teils kann zumindest als Teil einer Fahrzeugsoftware für zumindest einen Teil der Fahrzeuge der Fahrzeugflotte ausgebildet sein.

Zweckmäßigerweise ist der zweite Teil des Softwarepakets versionsunabhängig.

Beispielsweise kann der zweite Teil mit jeder Version des ersten Teils verknüpft sein. Insbesondere können die in dem zweiten Teil hinterlegten Informationen für alle Versionen des ersten Teils hinterlegt sein.

Weiter ist die Erfindung gerichtet auf einen Server oder ein Servernetzwerk, auch "Cloud", mit dem zuvor genannten Softwarepaket und/oder einer seiner Weiterbildungen.

Ferner ist die Erfindung gerichtet auf ein System umfassend den zuvor genannten Server bzw. das zuvor genannte Servernetzwerk oder einer jeweiligen Weiterbildung davon. Das System umfasst weiter eine Fahrzeugflotte mit mehreren Fahrzeugen, wobei die Fahrzeuge der Fahrzeugflotte verschiedene Fahrzeugsoftwares aufweisen.

Erfindungsgemäß weist der erste Teil des Softwarepakets mehrere Versionen auf, die zweckmäßigerweise miteinander verknüpft sind. Erfindungsgemäß ist jede Version des ersten Teils des Softwarepakets jeweils zumindest als Teil einer jeweiligen Fahrzeugsoftware ausgebildet.

Auf diese Weise kann jeweils eine der Versionen des ersten Teils des Softwarepakets jeweils auf zumindest einem der Fahrzeuge hinterlegt sein.

Zweckmäßigerweise ist der zweite Teil des Softwarepakets nicht auf einem oder mehreren Fahrzeugen der Fahrzeugflotte hinterlegt. Auf diese Weise kann auf eine Synchronisierung mit den Fahrzeugen verzichtet werden.

Es ist bevorzugt, wenn der zweite Teil des Softwarepakets nur auf dem Server bzw. dem Servernetzwerk hinterlegt ist. Auf diese Weise kann ein Zugriff für mehrerer Benutzer auf den zweiten Teil des Softwarepakets ermöglicht werden, ohne dass eine Synchronisierung erforderlich wird. Auf diese Weise kann der zweite Teil des Softwarepakets aktuell gehalten werden.

Außerdem ist die Erfindung gerichtet auf eine Verwendung des zuvor genannten Softwarepaketes und/oder einer seiner Weiterbildungen zur Auswertung von zumindest einer Diagnosemeldung, die in zumindest einem Fahrzeug der Fahrzeugflotte auftritt.

Erfindungsgemäß werden unter Verwendung des Softwarepakets alle zur Verfügung stehenden Informationen für die aufgetretene Diagnosemeldung, insbesondere alle im zweiten Teil des Softwarepakets hinterlegten Informationen für die aufgetretene Diagnosemeldung, angezeigt.

Auf diese Weise können aktuelle bzw. aktualisierte Informationen angezeigt werden.

Die Auswertung kann beispielsweise in einer landseitigen Einheit erfolgen. Insbesondere kann die zumindest eine Diagnosemeldung, die in zumindest einem Fahrzeug der Fahrzeugflotte auftritt, von diesem Fahrzeug an die landseitige Einheit übermittelt werden und dort ausgewertet werden. Hierzu kann die landseitige Einheit auf das Softwarepaket zugreifen.

Prinzipiell ist es auch möglich, dass die Auswertung innerhalb des Fahrzeugs erfolgt. In diesem Fall kann das Fahrzeug auf das Softwarepaket zugreifen.

Weitere Abwandlungen sind möglich.

Weiter ist die Erfindung gerichtet auf eine Verwendung des zuvor genannten Servers bzw. des zuvor genannten Servernetzwerks oder einer jeweiligen Weiterbildung davon zur Auswertung von zumindest einer Diagnosemeldung, die in zumindest einem Fahrzeug der Fahrzeugflotte auftritt.

Bei der Verwendung werden alle zur Verfügung stehenden Informationen, insbesondere alle im zweiten Teil des Softwarepakets hinterlegten Informationen, für die aufgetretene Diagnosemeldung von dem Server bzw. dem Servernetzwerk abgerufen.

Auf diese Weise können aktuelle bzw. aktualisierte Informationen angerufen werden.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren und der erfindungsgemäßen Vorrichtung kombinierbar. So sind Verfahrensmerkmale auch als Eigenschaft der entsprechenden Vorrichtungseinheit gegenständlich formuliert zu sehen und umgekehrt.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: ein System umfassend ein Servernetzwerk mit einem Softwarepaket und eine Fahrzeugflotte mit mehreren Fahrzeugen,
- FIG 2: eine Verwendung des Softwarepakets und des Servernetzwerks aus FIG 1.

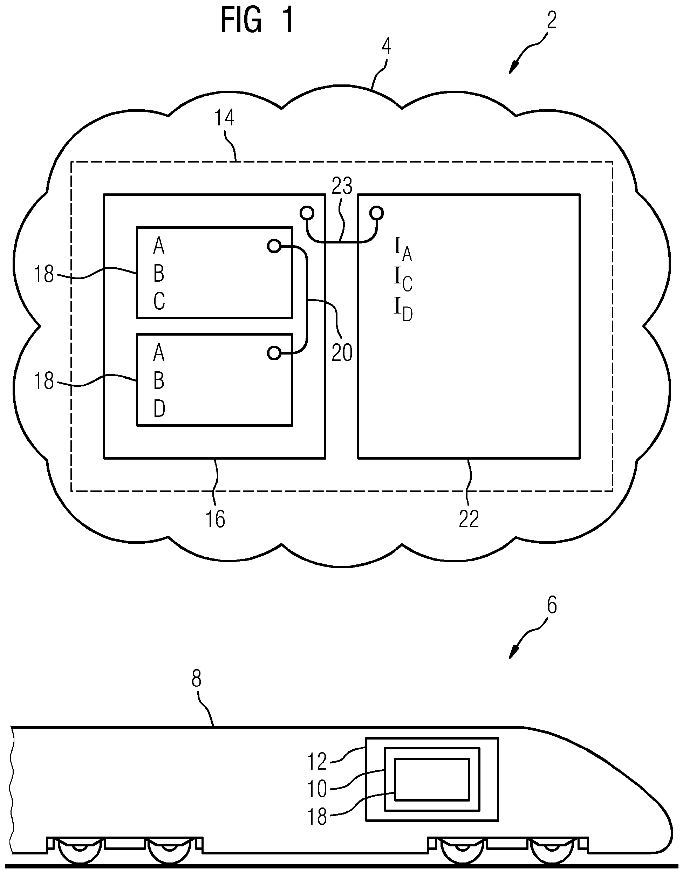

FIG 1 zeigt ein System 2 mit einem Servernetzwerk 4, auch Cloud, welches hier vereinfacht in Form einer Wolke dargestellt ist.

Das System 2 umfasst weiter eine Fahrzeugflotte 6 mit mehreren Fahrzeugen 8. In diesem Beispiel sind die Fahrzeuge 8 als Schienenfahrzeuge und ist die Fahrzeugflotte 6 somit als Schienenfahrzeugflotte ausgebildet. In FIG 1 ist nur ein Fahrzeug 8 der Fahrzeugflotte 6 bildhaft dargestellt.

Die Fahrzeuge 8 der Fahrzeugflotte 6 weisen verschiedene Fahrzeugsoftwares 10 auf. In jedem Fahrzeug 8 kann die jeweilige Fahrzeugsoftware 10 beispielsweise in einer jeweiligen Fahrzeugsteuerung 12 hinterlegt sein.

Beispielsweise kann ein Teil der Fahrzeuge 8 eine gegenüber einer früheren Fahrzeugsoftware 10 aktualisierte Fahrzeugsoftware 10 aufweisen, wohingegen ein anderer Teil der Fahrzeuge 8 (noch) die frühere Fahrzeugsoftware 10 aufweist.

Das Servernetzwerk 4 umfasst ein Softwarepaket 14 zur Verwaltung von Diagnosemeldungen und -informationen von der Fahrzeugflotte 6. Insbesondere ist das Softwarepaket 14 auf dem Servernetzwerk 4 hinterlegt.

Anstatt des Servernetzwerks 4 könnte prinzipiell auch ein zentraler Server verwendet werden (nicht gezeigt).

Das Softwarepaket 14 umfasst einen ersten Teil 16, in welchem eine Vielzahl von Diagnosemeldungen, hier beispielhaft die Diagnosemeldungen A, B, C, D, für die Fahrzeuge 8 der Fahrzeugflotte 6 hinterlegt ist. Insbesondere wird die Vielzahl von Diagnosemeldungen A, B, C, D bei der Erstellung des Softwarepakets 14 in dem ersten Teil 16 des Softwarepakets 14 hinterlegt.

Die Vielzahl von Diagnosemeldungen A, B, C, D umfasst diejenigen Diagnosemeldungen, die in den Fahrzeugen 8 der Fahrzeugflotte 6 auftreten können. Beispielsweise können in den Fahrzeugen 8 der Fahrzeugflotte 6 die Diagnosemeldungen A, B, C, D auftreten.

Der erste Teil 16 des Softwarepakets 14 wird bei der Erstellung des Softwarepakets 14 fest vorgegeben. Nach der Erstellung des Softwarepakets 14 ist der erste Teil 16 des Softwarepakets 14 nicht (- insbesondere nicht mehr -) veränderbar.

Der erste Teil 16 des Softwarepakets 14 weist mehrere Versionen 18 auf.

In jeder Version 18 des ersten Teils 16 ist zumindest ein Teil der Vielzahl von Diagnosemeldungen A, B, C, D hinterlegt.

In diesem Beispiel sind in der ersten, zeichnungsgemäß oberen Version 18 des ersten Teils 16 die Diagnosemeldungen A, B, C hinterlegt, wohingegen in der zweiten, zeichnungsgemäß unteren Version 18 des ersten Teils 16 die Diagnosemeldungen A, B, D hinterlegt sind.

Zur Erstellung des Softwarepakets 14 wird für jede Version 18 jeweils eine jeweilige Fahrzeugsoftware 10 herangezogen.

Insbesondere ist jede Version 18 jeweils zumindest als Teil einer jeweiligen Fahrzeugsoftware 10 ausgebildet.

Auf diese Weise umfasst jede Fahrzeugsoftware 10 jeweils eine der Versionen 18. Die jeweilige Fahrzeugsoftware 10 kann unter Verwendung seiner jeweiligen Version 18 Diagnosemeldungen erstellen.

In diesem Beispiel kann ein Teil der Fahrzeuge 8 der Fahrzeugflotte 6 die Diagnosemeldungen A, B, C erstellen, wohingegen ein anderer Teil der Fahrzeuge die Diagnosemeldungen A, B, D erstellen kann.

### Zurück zum Softwarepaket 14:

Bei der Erstellung des Softwarepakets 14 werden die verschiedenen Versionen 18, die der erste Teil 16 des Softwarepakets 14 aufweist, miteinander verknüpft. Das heißt, nach der Erstellung weist der erste Teil 16 des Softwarepakets 14 mehrere Versionen 18 auf, die miteinander verknüpft sind. Die Verknüpfung 20 der Versionen 18 ist in FIG 1 schematisch dargestellt.

Außerdem umfasst das Softwarepaket 14 einen zweiten Teil 22.

In dem zweiten Teil 22 des Softwarepakets 14 sind zumindest für einen Teil der Diagnosemeldungen Informationen hinterlegt. In diesem Beispiel ist für die Diagnosemeldung A die Information I_{A}, für die Diagnosemeldung C die Information I_{C} und für die Diagnosemeldung D die Information I_{D} hinterlegt.

Der zweite Teil 22 des Softwarepakets 14 ist nach der Erstellung des Softwarepakets 14 veränderbar.

Insbesondere können nach der Erstellung des Softwarepakets 14 in dem zweiten Teil 22 des Softwarepakets 14 zumindest für einen Teil der Diagnosemeldungen Informationen hinterlegt werden. Beispielsweise ist es möglich, dass die Informationen I_{A}, I_{C}, I_{D} erst nach der Erstellung des Softwarepakets 14 in dem zweiten Teil 22 hinzugefügt wurden. Außerdem können weitere Informationen, z.B. eine Information I_{D}, hinzugefügt werden.

Ferner können nach der Erstellung des Softwarepakets 14 in dem zweiten Teil 22 des Softwarepakets 14 zumindest für einen Teil der Diagnosemeldungen Informationen verändert werden. Beispielsweise können die Informationen I_{A}, I_{C}, I_{D} gelöscht, ergänzt und/oder geändert werden.

Zum Hinterlegen und/oder Verändern von Informationen in dem zweiten Teil 22 kann ein Benutzer auf diesen zweiten Teil zugreifen.

Der zweite Teil 22 des Softwarepakets 14 ist versionsunabhängig. Das heißt, dass die in dem zweiten Teil 22 hinterlegten Informationen I_{A}, I_{C}, I_{D} für alle Versionen 18 des ersten Teils 16 hinterlegt sind. Beispielsweise kann der zweite Teil 22 mit dem ersten Teil 16, insbesondere mit jeder Version 18 des ersten Teils 16, verknüpft sein (Verknüpfung 23).

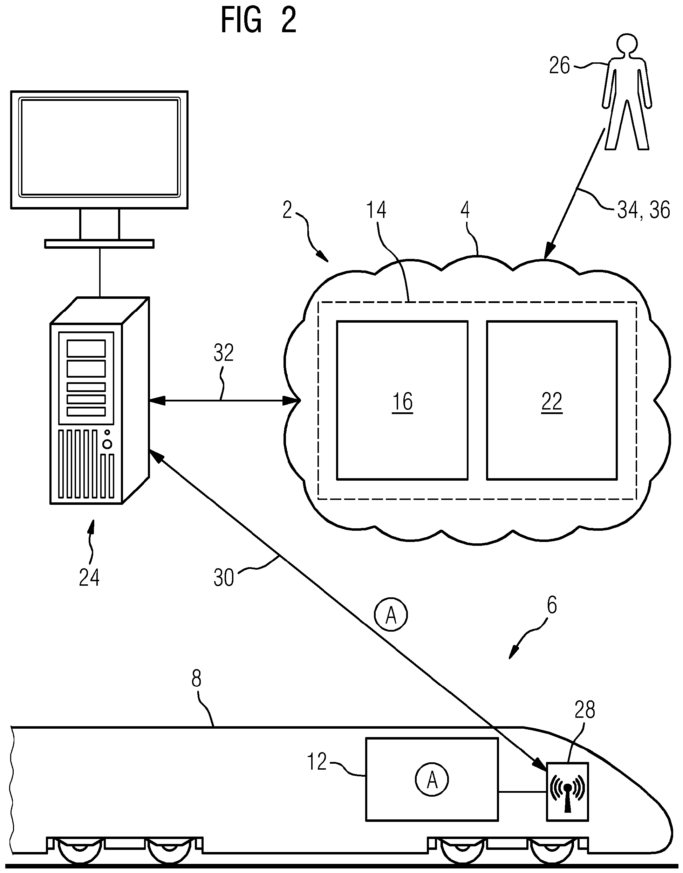

FIG 2 veranschaulicht eine Verwendung des Softwarepakets 14 und des Servernetzwerks 4 aus FIG 1.

FIG 2 zeigt das System 2 aus FIG 1 mit dem Servernetzwerk 4 und mit dem Fahrzeug 8 der Fahrzeugflotte 6. Außerdem zeigt FIG 2 eine landseitige Einheit 24 und einen Benutzer 26 des Softwarepakets 4.

In dem Fahrzeug 8 tritt eine Diagnosemeldung, hier beispielsweise die Diagnosemeldung A, auf. Beispielsweise ermittelt die Fahrzeugsteuerung 12 unter Verwendung der Fahrzeugsoftware 10 die Diagnosemeldung A. Die Diagnosemeldung A kann beispielsweise einen Defekt einer Komponente des Fahrzeugs 8 anzeigen.

Das Fahrzeug 8 weist eine Übermittlungseinheit 28 auf. Unter Verwendung der Übermittlungseinheit 28 wird die Diagnosemeldung A an die landseitige Einheit 24 übermittelt (Übermitteln 30) .

Zur Auswertung der Diagnosemeldung A ruft die landseitige Einheit 24 alle zur Verfügung stehenden Informationen I_{A} für die aufgetretene Diagnosemeldung A, insbesondere alle im zweiten Teil 22 des Softwarepakets 14 hinterlegten Informationen I_{A} für die aufgetretene Diagnosemeldung A, von dem Servernetzwerk 4 ab (Abrufen 32).

Die landseitige Einheit 24 zeigt dann die zur Verfügung stehenden Informationen I_{A}, insbesondere die im zweiten Teil 22 des Softwarepakets 14 hinterlegten Informationen I_{A}, für die aufgetretene Diagnosemeldung A an. Auf diese Weise erfolgt das Anzeigen unter Verwendung des Softwarepakets 14.

Die Information(en) I_{A} kann/können beispielsweise eine Priorität der Diagnosemeldung A und eine Wartungsanweisung für die Diagnosemeldung A umfassen. Weitere und/oder andere Informationen sind möglich.

Anhand der Information(en) I_{A} kann von der landseitigen Einheit 24 (bzw. seinem Bediener) eine Handlungsanweisung erstellt werden, die an das Fahrzeug 8 übermittelt wird (nicht gezeigt).

Das Fahrzeug 8 kann beispielsweise entsprechend der Handlungsanweisung ein Depot aufsuchen, in welchem eine Reparatur der defekten Komponente vorgenommen werden kann. Hierzu kann das Depot beispielsweise ebenfalls die alle zur Verfügung stehenden Informationen I_{A} für die aufgetretene Diagnosemeldung A, insbesondere alle im zweiten Teil 22 des Softwarepakets 14 hinterlegten Informationen I_{A} für die aufgetretene Diagnosemeldung A, von dem Servernetzwerk 4 abrufen.

Bei der Reparatur können neue Erkenntnisse erlangt werden. Das Depot kann als Benutzer 26 des Softwarepakets 14 in Erscheinung treten.

Der Benutzer 26, hier beispielsweise das Depot, kann auf den zweiten Teil 22 des Softwarepakets 14 zugreifen und die Information(en) I_{A} entsprechend der gewonnenen Erkenntnisse verändern (Verändern 34). Der Benutzer 26 kann auch (erstmalig) Informationen zu der Diagnosemeldung A hinterlegen (Hinterlegen 36) .

Auch andere Benutzer 26 können auf den zweiten Teil 22 des Softwarepakets 14 zugreifen und Informationen für bestimmte Diagnosemeldungen A, B, C, D hinterlegen (36) und/oder verändern (34).

Auf diese Weise kann der zweite Teil 22 des Softwarepakets 14 auf einem aktuellen Stand gehalten werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Verwaltung von Diagnosemeldungen (A, B, C, D) und -informationen (I_{A}, I_{C}, I_{D}) von einer Fahrzeugflotte (6) unter Verwendung eines Softwarepakets (14), bei dem
- bei der Erstellung des Softwarepakets (14) in einem ersten Teil (16) des Softwarepakets (14) eine Vielzahl von Diagnosemeldungen (A, B, C, D) für die Fahrzeuge (8) der Fahrzeugflotte (6) hinterlegt wird und
- nach der Erstellung des Softwarepakets (14) in einem zweiten Teil (22) des Softwarepakets (14) zumindest für einen Teil der Diagnosemeldungen (A, B, C, D) Diagnoseinformationene (I_{A}, I_{C}, I_{D}) hinterlegt (36) und/oder verändert (34) werden,
wobei
die Vielzahl von Diagnosemeldungen (A, B, C, D), die bei der Erstellung des Softwarepakets (14) in dem ersten Teil (16) des Softwarepakets (14) hinterlegt wird, diejenigen Diagnosemeldungen (A, B, C, D) umfasst, die in den Fahrzeugen (8) der Fahrzeugflotte (6) auftreten können.

2. Verfahren nach Anspruch 1,
wobei der erste Teil (16) des Softwarepakets (14) bei der Erstellung des Softwarepakets (14) fest vorgegeben wird.

3. Verfahren nach einem der vorhergehenden Ansprüche,
wobei der erste Teil (16) des Softwarepakets (14) unter der Verwendung von zumindest einer Fahrzeugsoftware (10) für die Fahrzeuge (8) der Fahrzeugflotte (6) fest vorgegeben wird.

4. Verfahren nach einem der vorhergehenden Ansprüche,
wobei die Fahrzeuge (8) der Fahrzeugflotte (6) verschiedene Fahrzeugsoftwares (10) aufweisen und
der erste Teil (16) des Softwarepakets (14) mehrere Versionen (18) aufweist,
wobei zur Erstellung des Softwarepakets (14) für jede Version (18) jeweils eine jeweilige Fahrzeugsoftware (10) herangezogen wird und bei der Erstellung des Softwarepakets (14) die verschiedenen Versionen (18) miteinander verknüpft werden (20) .

5. Verfahren nach einem der vorhergehenden Ansprüche, wobei nach der Erstellung des Softwarepakets (14) zumindest ein Benutzer (26), insbesondere mehrere Benutzer (26), auf den zweiten Teil (22) des Softwarepakets (14) zugreifen kann/können und Diagnoseinformationen (I_{A}, I_{C}, I_{D}) hinzufügen, löschen und/oder ändern kann/können.

6. Softwarepaket (14) zur Verwaltung von Diagnosemeldungen (A, B, C, D) und -informationen (I_{A}, I_{C}, I_{D}) von einer Fahrzeugflotte (6), insbesondere von einer Schienenfahrzeugflotte (6),
umfassend
- einen ersten Teil (16), in welchem eine Vielzahl von Diagnosemeldungen (A, B, C, D) für die Fahrzeuge (8) der Fahrzeugflotte (6) hinterlegt ist, und
- einen zweiten Teil (22), in welchem zumindest für einen Teil der Diagnosemeldungen (A, B, C, D) Diagnoseinformationen (I_{A}, I_{C}, I_{D}) hinterlegt sind,
wobei der zweite Teil (22) des Softwarepakets (14) nach der Erstellung des Softwarepakets (14) veränderbar ist,
wobei die Vielzahl von Diagnosemeldungen (A, B, C, D), die in dem ersten Teil (16) des Softwarepakets (14) hinterlegt sind, diejenigen Diagnosemeldungen (A, B, C, D) umfasst, die in den Fahrzeugen (8) der Fahrzeugflotte (6) auftreten können.

7. Softwarepaket (14) nach Anspruch 6,
wobei der erste Teil (16) des Softwarepakets (14) mehrere Versionen (18) aufweist, die miteinander verknüpft sind (20).

8. Softwarepaket (14) nach Anspruch 7,
wobei jede Version (18) des ersten Teils (16) zumindest als Teil einer Fahrzeugsoftware (10) für zumindest einen Teil der Fahrzeuge (8) der Fahrzeugflotte (6) ausgebildet ist.

9. Softwarepaket (14) nach einem der Ansprüche 6 bis 8,
wobei der zweite Teil (22) des Softwarepakets (14) versionsunabhängig ist.

10. Server oder Servernetzwerk (4) mit dem Softwarepaket (14) nach einem der Ansprüche 6 bis 9.

11. System (2) umfassend einen Server oder ein Servernetzwerk (4) nach Anspruch 10 und eine Fahrzeugflotte (6) mit mehreren Fahrzeugen (8), wobei die Fahrzeuge (8) der Fahrzeugflotte (6) verschiedene Fahrzeugsoftwares (10) aufweisen
wobei der erste Teil (16) des Softwarepakets (14) mehrere Versionen (18) aufweist, die miteinander verknüpft sind (20),
wobei jede Version (18) des ersten Teils (16) des Softwarepakets (14) jeweils zumindest als Teil einer jeweiligen Fahrzeugsoftware (10) ausgebildet ist.

12. Verwendung des Softwarepakets (14) nach einem der Ansprüche 6 bis 9 zur Auswertung von zumindest einer Diagnosemeldung (A), die in zumindest einem Fahrzeug (8) der Fahrzeugflotte (6) auftritt,
wobei unter Verwendung des Softwarepakets (14) alle im zweiten Teil (22) des Softwarepakets (14) hinterlegten Diagnoseinformationen (I_{A}) für die aufgetretene Diagnosemeldung (A) angezeigt werden.

13. Verwendung des Servers bzw. des Servernetzwerks (4) nach Anspruch 10 zur Auswertung von zumindest einer Diagnosemeldung (A), die in zumindest einem Fahrzeug (8) der Fahrzeugflotte (6) auftritt,
wobei alle im zweiten Teil (22) des Softwarepakets (14) hinterlegten Diagnoseinformationen (I_{A}), für die aufgetretene Diagnosemeldung (A) von dem Server bzw. dem Servernetzwerk (4) abgerufen werden (32) .

## Claims

1. Method for managing diagnostics messages (A, B, C, D) and diagnostics information (I_{A}, I_{C}, I_{D}) of a vehicle fleet (6) using a software package (14),
in which
- during the creation of the software package (14) a plurality of diagnostics messages (A, B, C, D) for the vehicles (8) of the vehicle fleet (6) are stored in a first part (16) of the software package (14) and
- after the creation of the software package (14) diagnostics information (I_{A}, I_{C}, I_{D}) at least for a portion of the diagnostics messages (A, B, C, D) is stored (36) and/or altered (34)
in a second part (22) of the software package (14),
wherein the plurality of diagnostics messages (A, B, C, D) which are stored in the first part (16) of the software package (14) during the creation of the software package (14) comprise those diagnostics messages (A, B, C, D) which can occur in the vehicles (8) of the vehicle fleet (6).

2. Method according to Claim 1,
wherein the first part (16) of the software package (14) is fixedly predefined during the creation of the software package (14) .

3. Method according to either of the preceding claims,
wherein the first part (16) of the software package (14) is fixedly predefined using at least one piece of vehicle software (10) for the vehicles (8) of the vehicle fleet (6).

4. Method according to either of the preceding claims,
wherein the vehicles (8) of the vehicle fleet (6) have different pieces of vehicle software (10) and
the first part (16) of the software package (14) has a plurality of versions (18),
wherein in order to create the software package (14), a respective piece of vehicle software (10) is in each case used for each version (18) and the different versions (18) are linked (20) with one another during the creation of the software package (14) .

5. Method according to either of the preceding claims,
wherein after the creation of the software package (14) at least one user (26), in particular a plurality of users (26), can access the second part (22) of the software package (14) and can add, erase and/or change diagnostics information (I_{A}, I_{C}, I_{D}).

6. Software package (14) for managing diagnostics messages (A, B, C, D) and diagnostics information (I_{A}, I_{C}, I_{D}) of a vehicle fleet (6), in particular of a rail vehicle fleet (6), comprising
- a first part (16), in which a plurality of diagnostics messages (A, B, C, D) for the vehicles (8) of the vehicle fleet (6) are stored, and
- a second part (22), in which diagnostics information (I_{A}, I_{C}, I_{D}) at least for a portion of the diagnostics messages (A, B, C, D) is stored,
wherein the second part (22) of the software package (14) is alterable after the creation of the software package (14),
wherein the plurality of diagnostics messages (A, B, C, D) which are stored in the first part (16) of the software package (14) comprise those diagnostics messages (A, B, C, D) which can occur in the vehicles (8) of the vehicle fleet (6).

7. Software package (14) according to Claim 6,
wherein the first part (16) of the software package (14) has a plurality of versions (18) which are linked (20) with one another.

8. Software package (14) according to Claim 7,
wherein each version (18) of the first part (16) is configured at least as part of a piece of vehicle software (10) for at least a portion of the vehicles (8) of the vehicle fleet (6).

9. Software package (14) according to any of Claims 6 to 8, wherein the second part (22) of the software package (14) is version-independent.

10. Server or server network (4) having the software package (14) according to any of Claims 6 to 9.

11. System (2) comprising a server or a server network (4) according to Claim 10 and a vehicle fleet (6) having a plurality of vehicles (8), wherein the vehicles (8) of the vehicle fleet (6) have different pieces of vehicle software (10),
wherein the first part (16) of the software package (14) has a plurality of versions (18) which are linked (20) with one another,
wherein each version (18) of the first part (16) of the software package (14) is configured in each case at least as part of a respective piece of vehicle software (10).

12. Use of the software package (14) according to any of Claims 6 to 9 for evaluating at least one diagnostics message (A) which occurs in at least one vehicle (8) of the vehicle fleet (6), wherein using the software package (14)
all pieces of diagnostics information (I_{A}) stored in the second part (22) of the software package (14) for the diagnostics message (A) that has occurred are indicated.

13. Use of the server or the server network (4) according to Claim 10 for evaluating at least one diagnostics message (A) which occurs in at least one vehicle (8) of the vehicle fleet (6),
wherein all pieces of diagnostics information (I_{A}) stored in the second part (22) of the software package (14) for the diagnostics message (A) that has occurred are retrieved (32) from the server or the server network (4).

## Revendications

1. Procédé de gestion de messages (A, B, C, D) de diagnostic et d'informations (I_{A}, I_{C}, I_{D}) de diagnostic d'une flotte (6) de véhicules en utilisant un paquet (14) logiciel,
dans lequel
- lors de l'établissement du paquet (14) logiciel, on met en mémoire dans une première partie (16) du paquet (14) logiciel une pluralité de messages (A, B, C, D) de diagnostic pour les véhicules (8) de la flotte (6) de véhicules et
- après l'établissement du paquet (14) logiciel, on met (36) en mémoire dans une deuxième partie (22) du paquet (14) logiciel, au moins pour une partie des messages (A, B, C, D) de diagnostic, des informations (I_{A}, I_{C}, I_{D}) de diagnostic et/ou on les modifie (34),
dans lequel
la pluralité de messages (A, B, C, D) de diagnostic, qui sont mis en mémoire lors de l'établissement du paquet (14) logiciel dans la première partie (16) du paquet (14) logiciel, comprennent les messages (A, B, C, D) de diagnostic, qui peuvent se produire dans les véhicules (8) de la flotte (6) de véhicules.

2. Procédé suivant la revendication 1,
dans lequel
on prescrit, d'une manière fixe, la première partie (16) du paquet (14) logiciel lors de l'établissement du paquet (14) logiciel.

3. Procédé suivant l'une des revendications précédentes,
dans lequel
on prescrit la première partie (16) du paquet (14) logiciel en utilisant au moins un logiciel (10) de véhicule pour les véhicules (8) de la flotte (6) de véhicules.

4. Procédé suivant l'une des revendications précédentes,
dans lequel
les véhicules (8) de la flotte (6) de véhicules ont des logiciels (10) de véhicule différents et
la première partie (16) du paquet (14) logiciel a plusieurs versions (18),
dans lequel pour l'établissement du paquet (14) logiciel on tire parti pour chaque version (18) respectivement d'un logiciel (10) de véhicule respectif et, lors de l'établissement du paquet (14) logiciel, on combine (20) entre elles les diverses versions (18) .

5. Procédé suivant l'une des revendications précédentes,
dans lequel, après l'établissement du paquet (14) logiciel, au moins un utilisateur (26), en particulier plusieurs utilisateurs, (26) peut/peuvent accéder à la deuxième partie (22) du paquet (14) logiciel et peut/peuvent ajouter, effacer et/ou modifier des informations (I_{A}, I_{C}, I_{D}) de diagnostic.

6. Paquet (14) logiciel pour la gestion de messages (A, B, C, D) de diagnostic et d'informations (I_{A}, I_{C}, I_{D}) de diagnostic d'une flotte (6) de véhicules, en particulier d'une flotte (6) de véhicules ferroviaires, comprenant
- une première partie (16), dans laquelle est mise en mémoire une pluralité de messages (A, B, C, D) de diagnostic pour les véhicules (8) de la flotte (6) de véhicules et
- une deuxième partie (22), dans laquelle sont mises en mémoire, au moins pour une partie des messages (A, B, C, D) de diagnostic, des informations (I_{A}, I_{C}, I_{D}) de diagnostic,
dans lequel
la deuxième partie (22) du paquet (14) logiciel peut être modifiée après l'établissement du paquet (14) logiciel,
dans lequel
la pluralité de messages (A, B, C, D) de diagnostic, qui sont mis en mémoire dans la première partie (16) du paquet (14) logiciel, comprennent des messages (A, B, C, D) de diagnostic, qui peuvent se produire dans les véhicules (8) de la flotte (6) de véhicules.

7. Paquet (14) logiciel suivant la revendication 6,
dans lequel
la première partie (16) du paquet (14) logiciel a plusieurs versions (18), qui sont combinées (20) entre elles.

8. Paquet (14) logiciel suivant la revendication 7,
dans lequel
chaque version (18) de la première partie (16) est constituée au moins comme partie d'un logiciel (10) de véhicule pour au moins une partie des véhicules (8) de la flotte (6) de véhicules.

9. Paquet (14) logiciel suivant l'une des revendications 6 à 8,
dans lequel
la deuxième partie (22) du paquet (14) logiciel est indépendante des versions.

10. Serveur ou réseau (4) serveur, comprenant le paquet (14) logiciel suivant l'une des revendications 6 à 9.

11. Système (2) comprenant un serveur ou un réseau (4) serveur suivant la revendication 10 et une flotte (6) de véhicules ayant plusieurs véhicules (8), dans lequel les véhicules (8) de la flotte (6) de véhicules ont divers logiciels (10) de véhicule, dans lequel
la première partie (16) du paquet (14) logiciel a plusieurs versions (18) qui sont combinées (20) entre elles,
dans lequel chaque version (18) de la première partie (16) du paquet (14) logiciel est constituée respectivement au moins comme partie d'un logiciel (10) de véhicule respectif.

12. Utilisation du paquet (14) logiciel suivant l'une des revendications 6 à 9, pour l'évaluation d'au moins un message (A) de diagnostic, qui se produit dans au moins un véhicule (8) de la flotte (6) de véhicules,
dans lequel, en utilisant le paquet (14) logiciel, on affiche toute les informations (I_{A}) de diagnostic, mises en mémoire dans la deuxième partie (22) du paquet (14) logiciel, pour le message (A) de diagnostic apparu.

13. Utilisation du serveur du réseau (4) serveur suivant la revendication 10, pour l'évaluation d'au moins un message (A) de diagnostic, qui apparaît dans au moins un véhicule (8) de la flotte (6) de véhicules,
dans lequel toutes les informations (I_{A}) de diagnostic, mises en mémoire dans la deuxième partie (22) du paquet (14) logiciel, pour le message (A) de diagnostic apparu, sont appelées (32) par le serveur ou par le réseau (4) de serveur.
